(19) Europäisches Patentamt / European Patent Office / Office européen des brevets

(11) **EP 2 217 823 B1**

(12) **EUROPÄISCHE PATENTSCHRIFT**

(45) Veröffentlichungstag und Bekanntmachung des Hinweises auf die Patenterteilung:
**20.06.2012 Patentblatt 2012/25**

(21) Anmeldenummer: **08855007.4**

(22) Anmeldetag: **29.10.2008**

(51) Int Cl.:
**F16D 23/12** *(2006.01)*    **F16H 25/12** *(2006.01)*

(86) Internationale Anmeldenummer:
**PCT/EP2008/064653**

(87) Internationale Veröffentlichungsnummer:
**WO 2009/068403 (04.06.2009 Gazette 2009/23)**

(54) **VORSPANNEINHEITMODUL**

PRELOAD UNIT MODULE

MODULE À UNITÉ DE PRÉCONTRAINTE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **28.11.2007 DE 102007057254**
**29.02.2008 DE 102008011910**

(43) Veröffentlichungstag der Anmeldung:
**18.08.2010 Patentblatt 2010/33**

(73) Patentinhaber: **Schaeffler Technologies AG & Co. KG**
**91074 Herzogenaurach (DE)**

(72) Erfinder:
• **JURJANZ, Ramon**
**91058 Erlangen (DE)**
• **WIESINGER, Fritz**
**91126 Kammerstein (DE)**
• **SMETANA, Tomas**
**91056 Erlangen (DE)**

(56) Entgegenhaltungen:
**FR-A- 2 286 975         US-A1- 2006 054 373**
**US-A1- 2007 155 573**

**Beschreibung**

Die Erfindung betrifft ein Vorspanneinheitmodul.

**Hintergrund der Erfindung**

Derartige Vorspanneinheiten finden bei Getrieben von Kraftfahrzeugen Verwendung, um insbesondere die Betätigung einer Reibungskupplung im Antriebsstrang eines Kraftfahrzeugs zu ermöglichen.

Die Deutsche Patentschrift DE 10 2005 053 555 B3 offenbart eine Axialverstellvorrichtung in Form einer Kugelrampenanordnung. Die Axialverstellvorrichtung umfasst zwei auf einer gemeinsamen Achse zentrierte Scheiben, von denen eine axial abgestützt ist und die andere axial verschiebbar ist und von denen zumindest eine drehend antreibbar ist. Die beiden Scheiben weisen jeweils auf ihren zueinander zugewandten Stirnflächen eine gleich große Mehrzahl von in Umfangsrichtung verlaufenden Kugelrinnen auf. Die beiden Scheiben werden also mit Kugeln als Wälzkörper gelagert.

Die U.S.-Patentschrift 5,485,904 offenbart ebenfalls eine Vorspanneinheit, deren Rappenscheiben mittels Kugeln als Wälzkörper gegeneinander verdrehbar angeordnet sind.

Ebenso offenbart das U.S.-Patent 5,620,072 eine Vorspanneinheit für eine Lamellenkupplung, deren Rampenscheiben ebenfalls mit Kugeln als Wälzkörper gegeneinander verdrehbar angeordnet sind.

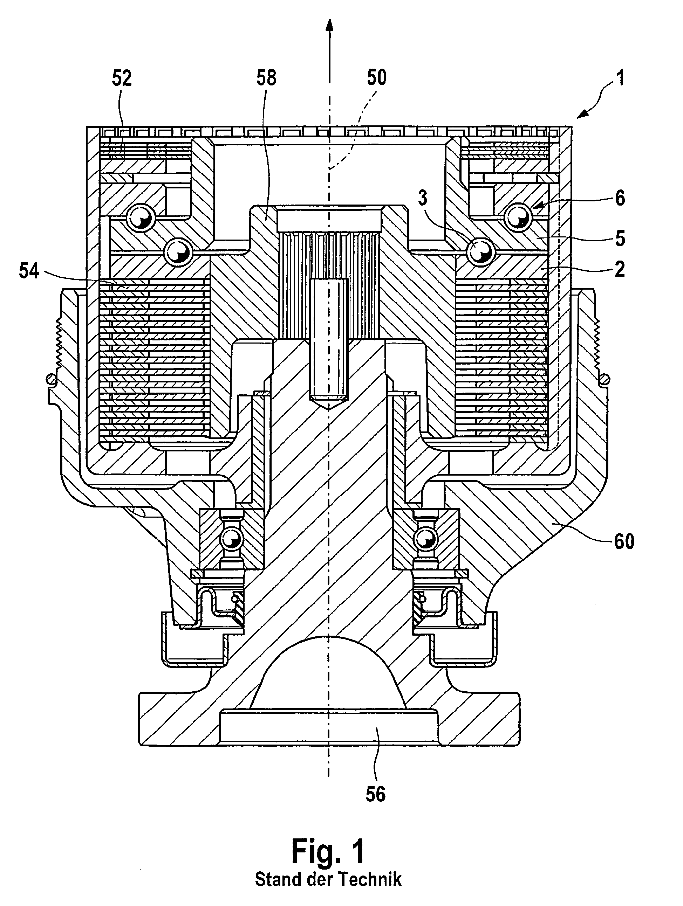

Figur 1 zeigt schematisch die Anwendung einer Vorspanneinheit 1 gemäß dem Stand der Technik. Eine Vorspanneinheit 1 findet z. B. bei einer Allradzuschaltung (Coupler-Unit) Verwendung und setzt sich, wie in Figur 1 dargestellt, im Wesentlichen aus einem Gehäuse 60 zusammen, in dem eine zweite Lamellenkupplung 54, eine erste Lamellenkupplung 52 und die Vorspanneinheit 1 gemäß dem Stand der Technik angeordnet sind. Das Gehäuse 60 der Allradzuschaltung besitzt eine Getriebeeingangswelle 56 und eine Getriebeausgangswelle 58. Die Vorspanneinheit 1 umfasst eine erste Rampenscheibe 2 und eine zweite Rampenscheibe 5. Zwischen den beiden Rampenscheiben 2 und 5 befinden sich zwischen fünf bis sechs Kugeln, die die Wälzkörper 3 darstellen. In den Rampenscheiben 2 und 5 sind jeweils entsprechende Rampen (in Figur 1 nicht dargestellt) bzw. Rampenkonturen 8 (in Figur 1 nicht dargestellt) ausgebildet, in denen die Wälzkörper 3 rollen. Die Rampen 9, 10 sind schräg ausgebildet, was eine reibungsarme Verschiebung der beiden Rampenscheiben 2, 5 in Richtung der Achse 50 bewirkt. Mit der Verschiebung der beiden Rampenscheiben 2 und 5 ist somit ein Hub in Richtung der Achse 50 erzielbar. Eine der Rampenscheiben 2 oder 5 kann mittels der ersten Lamellenkupplung 52 elektromagnetisch zugeschaltet werden.

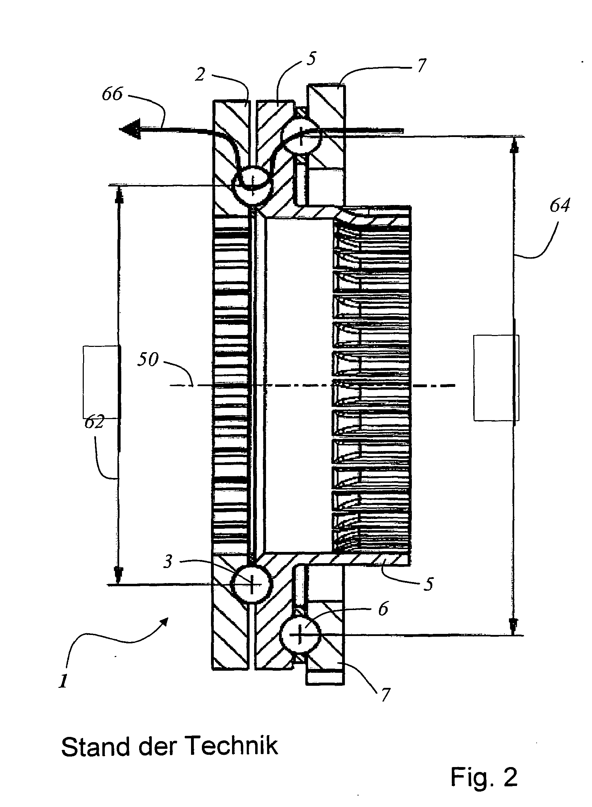

Figur 2 zeigt eine schematische Darstellung einer Vorspanneinheit 1, wie sie aus dem Stand der Technik *zum Beispiel aus US2007/0155573A1* bekannt ist. Die Vorspanneinheit 1 besteht aus einer ersten Rampenscheibe 2 und einer zweiten Rampenscheibe 5. Zwischen den beiden Rampenscheiben 2 und 5 sind zwischen 5 und 6 Wälzkörper 3 vorgesehen. Die Wälzkörper 3 des Standes der Technik sind als Kugeln ausgebildet. An die zweite Rampenscheibe 5 schließt sich eine Anlaufscheibe 7 an, die gegenüber der zweiten Rampenscheibe 5 mit einem Axiallager 6 gelagert ist. Wie aus der Darstellung in Figur 2 ersichtlich ist, besitzt ein erster Teilkreis 62, auf dem die Wälzkörper 3 angeordnet sind, einen kleineren Durchmesser als ein zweiter Teilkreis 64, auf dem das Axiallager 6 angeordnet ist. Durch den Unterschied zwischen dem ersten Teilkreis 62 und dem zweiten Teilkreis 64 kommt es bei einer Beanspruchung der Vorspanneinheit 1 zu einer Kraftumlenkung. Dies hat den Nachteil, dass es dadurch zu Verformungen und starken mechanischen Beanspruchungen der ersten Rampenscheibe 2 und der zweiten Rampenscheibe 5 kommen kann. Der axiale Kraftfluss 66 ist somit nicht vollkommen parallel zu der Achse 50.

Die Deutsche Patentschrift DE 10 2004 015 271 B4 offenbart eine Drehmoment-Übertragungsvorrichtung. Hier sind die Wälzkörper und das Axiallager auf einem Teilkreis angebracht, der den gleichen Durchmesser aufweist. Als Wälzkörper werden Kugeln verwendet.

Eine axiale Vorspanneinheit wird ebenfalls in den Kegelraddifferenzialen zur Vorspannung von Lamellenkupplungen der Überlagerungsstufen eingesetzt.

Wie in Figur 1 und Figur 2 beschrieben, ist die zweite Rampenscheibe 5 mit einer Innenzahnung versehen und ist mit der Getriebeausgangswelle 58 und somit mit der Hinterachse (nicht dargestellt) verbunden. Zwischen der Getriebeeingangswelle 56 und der Getriebeausgangswelle 58 befindet sich die zweite Lamellenkupplung 54. Drehen sich die Getriebeeingangswelle 56 und die Getriebeausgangswelle 58 mit unterschiedlichen Drehzahlen (z. B. wenn die Hinterräder auf Eis stehen), verdrehen sich die Rampenscheiben 2 und 5 der Vorspanneinheit 1 relativ zueinander. Die daraus resultierende Normalkraft betätigt die zweite Lamellenkupplung 54. Das Drehmoment kann somit vom Getriebe zur Hinterachse übertragen werden. Um Kraftstoff auf der Autobahn zu sparen, können die Lamellen der Vorspanneinheit 1 elektromagnetisch abgeschaltet werden. Der Antrieb erfolgt in dem Fall nur an den Vorderrädern des Kraftfahrzeugs.

Der Erfindung liegt die Aufgabe zugrunde, ein Vorspanneinheitmodul zu schaffen, das zumindest auf einfache Weise in einem dafür vorgesehenen Getriebe montiert werden kann.

Die obige Aufgabe wird durch ein Vorspanneinheitmodul gelöst, das die Merkmale des Anspruchs 1 umfasst.

*Erfindungsgemäß sind zumindest eine der Rampenscheiben (2, 5) und der Käfig (4) formschlüssig zu einer*

*selbst haltenden Einheit axial aneinander gehalten sind, wobei der Käfig (4) gegenüber der zumindest einen Rampenscheibe (2, 5) verdreh-schwenkbar ist.*

Das Vorspanneinheitmodul umfasst im Wesentlichen als Bauteile die erste Rampenscheibe, den Käfig zur Halterung der Wälzkörper, die zweite Rampenscheibe, ein Lager und eine Anlaufscheibe. Dabei sind der Käfig, die erste Rampenscheibe, die Wälzkörper im Käfig, die zweite Rampenscheibe und das Lager zu einer selbst haltenden Einheit gesichert bzw. miteinander verbunden.

Die Anlaufscheibe ist am Lager formschlüssig gehalten, so dass alle Bauteile die selbst halternde Einheit bilden.

Der Käfig besteht aus einer Radialscheibe, an der erste und zweite Haltelappen ausgeformt sind. Die ersten und zweiten Haltelappen stehen im Wesentlichen senkrecht von der Radialscheibe ab, wobei die ersten Haltelappen in eine axiale Richtung weisen, die der axialen Richtung der zweiten Haltelappen entgegengesetzt ist.

An den ersten und zweiten Haltelappen sind jeweils Haltenasen ausgebildet, die zumindest mit der ersten Rampenscheibe und der zweiten Rampenscheibe zur formschlüssigen Halterung zusammenwirken.

Der Käfig ist vorzugsweise ein Blechbiegeteil oder ein Zieh- bzw. Stanz-Biegebauteil aus Blech. In der Radialscheibe des Käfigs sind mehrere Taschen zum Führen und Halten der Wälzkörper ausgebildet. Die Taschen haben elastische Halterungen ausgebildet, in die die Wälzkörper einschnappen.

Die Wälzkörper können Kugeln oder Rollen sein. Es ist von besonderem Vorteil, wenn mindestens drei aber höchstens fünf Rollen zwischen den beiden Rampenscheiben gleich verteilt am Käfig angeordnet sind. In der bevorzugten Ausführungsform sind drei Rollen zwischen den beiden Rampenscheiben gleich verteilt angeordnet. Dabei hat jede der beiden Rampenscheiben drei Rampenkonturen ausgebildet.

Die Rampenkonturen, die Rollen und ein Winkel unter dem die Rampen angeordnet sind, sind derart abgestimmt, dass bei einem bestimmten maximalen Drehwinkel zwischen den beiden Rampenscheiben die Vorspanneinheit in Richtung der Achse eine maximale Hubbewegung von 5,5 mm erreicht.

Die aus den zwei Rampen gebildete Rampenkontur besitzt einen dreieckförmigen Querschnitt. An einer Stelle besitzt die Rampenscheibe eine reduzierte Wandstärke im Vergleich zu der Wandstärke der Rampenscheibe, an der keine Rampenkontur ausgebildet ist.

Das Verhältnis des Durchmessers der Rollen zu der reduzierten und durch die Rampenkontur verursachten minimalem Wandstärke ist kleiner als 8:1.

Es ist von besonderem Vorteil, wenn die beiden Rampenscheiben als kaltgeformte Bauteile aus einem Blechrohling hergestellt werden können. Dabei werden die Rampenkonturen in die Rampenscheibe ebenfalls eingeprägt. Dieses Prägen ist ebenfalls ein kaltumformender Prozess.

Als Material der Blechrohlinge hat sich kaltumformbarer Stahl des Typs "16MnCr5" als vorteilhaft erwiesen. Ebenfalls von Vorteil als Material der Blechrohlinge ist ein kaltumformbarer Stahl des Typs "C45", wobei die umgeformten Blechrohlinge vor der mechanischen Belastung in der Vorspanneinheit gehärtet werden müssen. Für einen Fachmann ist es selbstverständlich, welches Härteverfahren hierzu am besten geeignet ist.

Um eine Sicherheit gegen Überlast zu erzielen, ist es von Vorteil, wenn die Rollen zwischen der ersten Rampenscheibe und der zweiten Rampenscheibe auf einem ersten Teilkreis angeordnet sind. Ferner sind das Lager zwischen der zweiten Rampenscheibe und der Anlaufscheibe auf einem zweiten Teilkreis angeordnet. Der Vorteil der gegenwärtigen Erfindung ist, dass der erste Teilkreis und der zweite Teilkreis den gleichen Durchmesser besitzen.

Die Vorspanneinheit besteht im Wesentlichen aus der ersten Rampenscheibe, aus einem Käfig zur Halterung der Rollen, aus der zweiten Rampenscheibe, aus dem Lager und der Anlaufscheibe.

Im Folgenden sollen Ausführungsbeispiele die Erfindung und ihre Vorteile anhand der beigefügten Figuren näher erläutern.

Figur 1     zeigt eine schematische Darstellung der Verwendung einer Vorspanneinheit bei einer Allradzuschaltung.

Figur 2     zeigt eine schematische Darstellung der Ausgestaltung einer Vorspanneinheit gemäß dem Stand der Technik.

Figur 3     zeigt eine schematische Darstellung der in der Vorspanneinheit wirkenden Kräfte, wenn diese betätigt wird.

Figur 4     zeigt eine Schnittansicht durch ein Vorspanneinheitmodul, gemäß der gegenwärtigen Erfindung.

Figur 5     zeigt eine Explosionsdarstellung des erfindungsgemäßen Vorspanneinheitmoduls.

Figur 6     zeigt ebenfalls eine Explosionsdarstellung des erfindungsgemäßen Vorspanneinheitmoduls, wobei jedoch der Blick von oben auf die erste Rampenscheibe gerichtet ist.

Figur 7     zeigt eine Seitenansicht des erfindungsgemäßen Vorspanneinheitmoduls, wobei sich die Rollen zwischen den beiden Rampenscheiben am tiefsten Punkt der Rampenkontur befinden.

Figur 8   zeigt eine schematische Seitenansicht des Vorspanneinheitmoduls, wobei zumindest eine der beiden Rampenscheiben gegeneinander verdreht sind, so dass zwischen der ersten Rampenscheibe und der zweiten Rampenscheibe ein Hub in Richtung der Achse vorliegt.

Figur 9   zeigt eine perspektivische Ansicht des Käfigs zur Halterung der Rollen.

Figur 10   zeigt eine Detailansicht des Vorspanneinheitmoduls, bei der das Zusammenwirken einer der Rollen mit der Rampenscheibe zu erkennen ist.

Figur 11   zeigt eine perspektivische Ansicht der ersten Rampenscheide vor dem Aussetzen des Käfigs.

Figur 12   zeigt den auf die erste Rampenscheide aufgesetzten Käfig.

Figur 13   zeigt die zweite Rampenscheibe, welche auf den Käfig ausgesetzt ist.

Figur 14   zeigt das Axiallager, welches auf der zweiten Rampenscheibe aufliegt.

Figur 15   zeigt die Anlaufscheibe, welche mit der Vorspanneinheit verbunden ist.

Obwohl sich die nachfolgende Beschreibung des Vorspanneinheitmoduls 1 auf die Verwendung von drei Rollen zwischen den Rampenscheiben 2, 5 bezieht, soll dies nicht als eine Beschränkung der Erfindung aufgefasst werden. Wie bereits der vorangehenden Beschreibung zu entnehmen ist, können zwischen der ersten und der zweiten Rampenscheibe 2, 5 drei bis fünf Rollen angeordnet sein. Ferner sei darauf hingewiesen, dass in den verschiedenen Figuren für gleiche Elemente die gleichen Bezugszeichen verwendet werden. Ebenso kann die gegenwärtige Erfindung auch mit Kugeln als Wälzkörper realisiert werden.

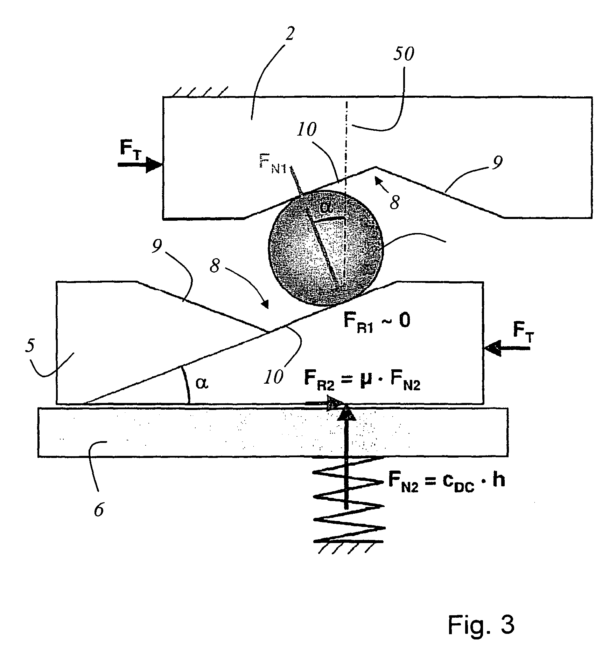

Figur 3 zeigt eine schematische Darstellung der wirkenden Kräfte, wenn die erste Rampenscheibe 2 gegenüber der zweiten Rampenscheibe 5 verdreht ist. Die erste Rampenscheibe 2 und die zweite Rampenscheibe 5 haben jeweils eine Rampenkontur 8 ausgebildet. Die Rampenkontur 8 besteht aus einer ersten Rampe 9 und einer zweiten Rampe 10. Die beiden Rampen 9, 10 sind um einen Winkel $\alpha$ geneigt. Durch das Verdrehen der Rampenscheiben 2 und 5 relativ zueinander, rollen die Wälzkörper 3 entlang der schrägen Rampen 9 oder 10. Dies bewirkt eine reibungsarme Verschiebung der Rampenscheiben 2 und 5 in Richtung der Achse 50. Die Verschiebung geschieht so lange, bis ein Hub h sein Maximum erreicht hat. Die durch das Torsionsmoment erzeugte tangentiale Kraft $F_T$ an den beiden Rampenscheiben 2 und 5 führt somit zu einer axialen Vorspannung des Vorspanneinheitmoduls 1 mit einer Kraft $F_{N2}$ in axialer Richtung. Von den Rollen wirkt eine Normalkraft $F_{N1}$ auf die beiden Rampen 10. Die axiale Kraft $F_{N2}$ errechnet sich an Hand von Gleichung 1.

$$F_{N2} = c_{DC} * h \qquad \text{(Gleichung 1)}$$

Die tangentiale Kraft $F_T$ kann aus der Gleichung 2 berechnet werden.

$$F_T = F_{N2} * (\mu * \cos \alpha + \sin \alpha) / \cos \alpha \qquad \text{(Gleichung 2)}$$

Die auf die Rampen 9 und 10 wirkende Normalkraft $F_{N1}$ errechnet sich anhand der Gleichung 3.

$$F_{N1} = F_{N2} / \cos \alpha \qquad \text{(Gleichung 3)}$$

Das wirkende Kupplungsmoment $T_{BC}$ errechnet sich anhand der Gleichung 4.

$$T_{BC} = F_T * ( D_m / 2 ) \qquad\qquad \text{(Gleichung 4)}$$

Dabei ist $D_m$ der Teilkreisdurchmesser, $\alpha$ ist der Winkel unter dem die Rampen 9 und 10 geneigt sind. h ist der axiale Hub, der durch das Verdrehen der Rampenscheiben 2 und 5 relativ zueinander erzielt werden kann, $C_{DC}$ ist ein Parameter für die Steifigkeit der verwendeten Lamellenkupplung und $\mu$ ist der Reibkoeffizient.

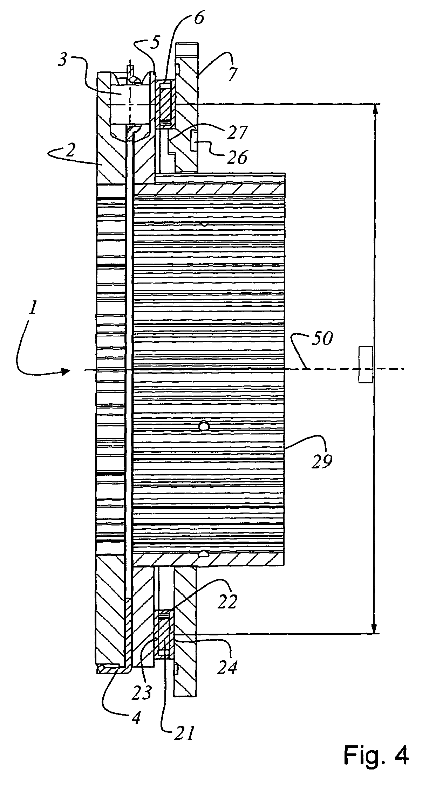

Figur 4 zeigt eine Schnittdarstellung des Vorspanneinheitmoduls 1, gemäß der Erfindung. Das Vorspanneinheitmodul 1 besteht im Wesentlichen aus einer ersten Rampenscheibe 2 und einer zweiten Rampenscheibe 5. Zwischen der ersten Rampenscheibe 2 und der zweiten Rampenscheibe 5 sind mehrere Wälzkörper 3 angeordnet. Die Wälzkörper 3 sind bei der hier dargestellten Ausführungsform als Rollen ausgebildet. Es hat sich gezeigt, dass es besonders vorteilhaft ist, wenn zwischen der ersten Rampenscheibe 2 und der zweiten Rampenscheibe 5 mindestens drei Rollen, aber nicht mehr als fünf Rollen angeordnet sind. Mittels der Rollen ist es möglich, die erste Rampenscheibe 2 relativ zu der zweiten Rampenscheibe 5 zueinander möglichst reibungsfrei zu verdrehen. Zwischen der zweiten Rampenscheibe 5 und der Anlaufscheibe 7 ist ein Axiallager 6 vorgesehen. Das Axiallager 6 ist dabei in der hier dargestellten Ausführungsform zwischen einer ersten Laufscheibe 23 und einer zweiten Laufscheibe 24 angeordnet. Das Axiallager 6 besteht aus einer Vielzahl von Nadeln 21, die in einem Käfig 22 angeordnet sind. Das in Figur 4 dargestellte Axiallager 6 ist mittels der Laufscheiben 23 und 24 zu einer selbst haltenden Einheit gekapselt. Wie aus der Darstellung der Figur 4 ersichtlich ist, liegen die Rollen, welche zwischen der ersten Rampenscheibe 2 und der zweiten Rampenscheibe 5 vorgesehen sind, auf einem ersten Teilkreis 62. Ebenso liegt das Axiallager 6, welches zwischen der zweiten Rampenscheibe 5 und der Anlaufscheibe 7 angeordnet ist, auf einem zweiten Teilkreis 64. Gemäß der gegenwärtigen Erfindung besitzen der erste Teilkreis 62 und der zweite Teilkreis 64 den gleichen Durchmesser.

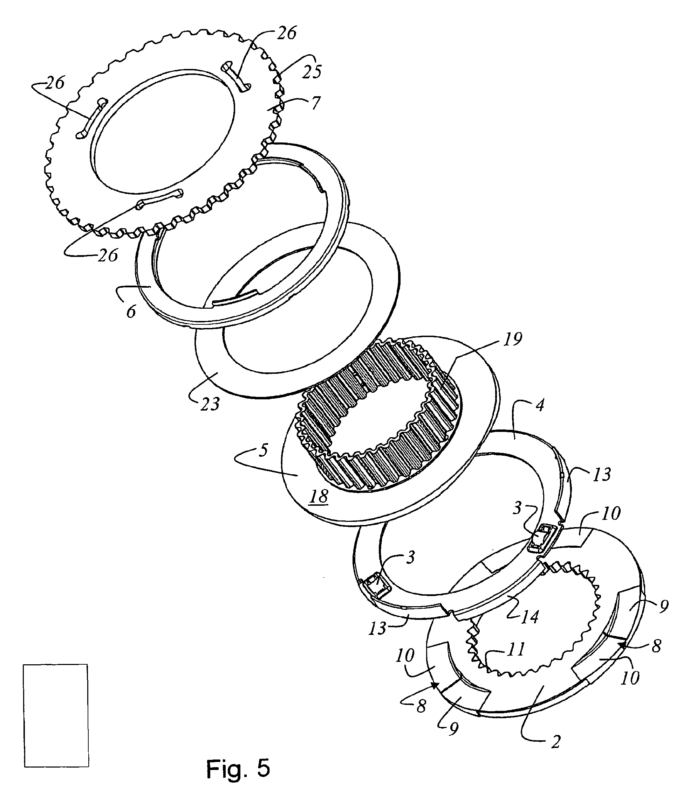

Figur 5 zeigt eine perspektivische Ansicht der Explosionsdarstellung des Vorspanneinheitmoduls 1. Wie aus dieser Darstellung ersichtlich ist, besteht das Vorspanneinheitmodul 1 im Wesentlichen aus einer ersten Rampenscheibe 2, einem Käfig 4, in dem mehrere Wälzlager 3 angeordnet sind. Wie bereits mehrfach erwähnt, sind die Wälzlager 3 als Rollen oder auch als Kugeln ausgebildet, die in dafür vorgesehenen Taschen 16 gehalten sind. An den Käfig 4 schließt sich die zweite Rampenscheibe 5 an. Die Oberseite 5a der zweiten Rampenscheibe 5, welche keine Rampen 9, 10 eingeprägt hat, liegt an dem Axiallager 6 an. An das Axiallager 6 schließt sich die Anlaufscheibe 7 an.

Da der Käfig 4 in der hier dargestellten Ausführungsform drei Rollen trägt, sind somit in der ersten Rampenscheibe 2 drei Rampenkonturen 8 eingeprägt. Jede der Rampenkonturen 8 besteht aus einer ersten Rampe 9 und einer zweiten Rampe 10. Außerdem weist die erste Rampenscheibe 2 innen eine Verzahnung 11 auf, die einen drehmomentfesten Eingriff in eine nicht dargestellte Getriebewelle zur Verfügung stellt. Die erste Rampenscheibe 2 ist vorzugsweise ein Stanz-Prägeteil, welches mittels Kaltumformung hergestellt wird.

Der Käfig 4 besteht im Wesentlichen aus einer Radialscheibe 12, aus der ein erster Haltelappen 13 und ein zweiter Haltelappen 14 ausgeformt sind. Die ersten Haltelappen 13 und die zweiten Haltelappen 14 stehen dabei im Wesentlichen senkrecht von der Radialscheibe 12 ab. In der Radialscheibe 12 sind entsprechend der Anzahl der Rollen bzw. Wälzkörper 3 die Taschen 16 ausgebildet, in denen die Rollen gehalten werden.

Die zweite Rampenscheibe 5 weist einen Radialflansch 18 auf, der einteilig mit einer sich axial erstreckenden Muffe 19 verbunden ist. Alternativ sind Muffe 19 und Radialflansch 18 miteinander verbundene Bauteile. An dem Radialflansch 18 sind ebenfalls mehrere Rampen 8 ausgebildet. Die Muffe 19 ist für den drehmomentfesten aber axial verschiebbaren Eingriff mit einer nicht dargestellten Welle verzahnt. In dem in Figur 5 dargestellten Beispiel ist eine Verzahnung 20 aus wellenförmig geformtem Blech gebildet. Die zweite Rampenscheibe 5 ist wahlweise ein Zieh-Stanz-Prägebauteil aus einem Schmiede- oder Blechrohling. Alternativ dazu, kann die zweite Rampenscheibe 5 aus den zuvor genannten Rohlingen fließgepresst werden.

Wie bereits beschrieben, schließt sich an die zweite Rampenscheibe 5 das Axiallager 6 an. Wie bereits in der Beschreibung zu Figur 4 erwähnt, ist das Axiallager 6 ein Nadellager mit mehreren Nadeln 21. Die Nadeln 21 sind dabei in einem Käfig 22 geführt. Die Laufbahn für die Nadeln 21 sind entweder an der Rampenscheibe 5 und/oder der Anlaufscheibe 7 oder wie in den in Figur 4 gezeigten Beispiel an den Laufscheiben 23 und 24 ausgebildet. Das in Figur 5 dargestellte Axiallager 6 ist mittels der Laufscheiben 23 und 24 zu einer selbst halternden Einheit gekapselt.

An das Axiallager 6 schließt sich die Anlaufscheibe 7 an. Die Anlaufscheibe 7 ist vorzugsweise ein Stanz-Prägebauteil und weist innen so wie außen eine Verzahnung 25 für drehmomentfeste Verbindungen auf. Drehmomentfeste Verbindungen sind vorzugsweise formschlüssige Verbindungen, mit denen Drehmomente um die Rotationsachse der Bauteile übertragen werden können. Weiterhin weist die Anlaufscheibe 7 auf einer Oberseite 7a mehrere Ausformungen 26 auf.

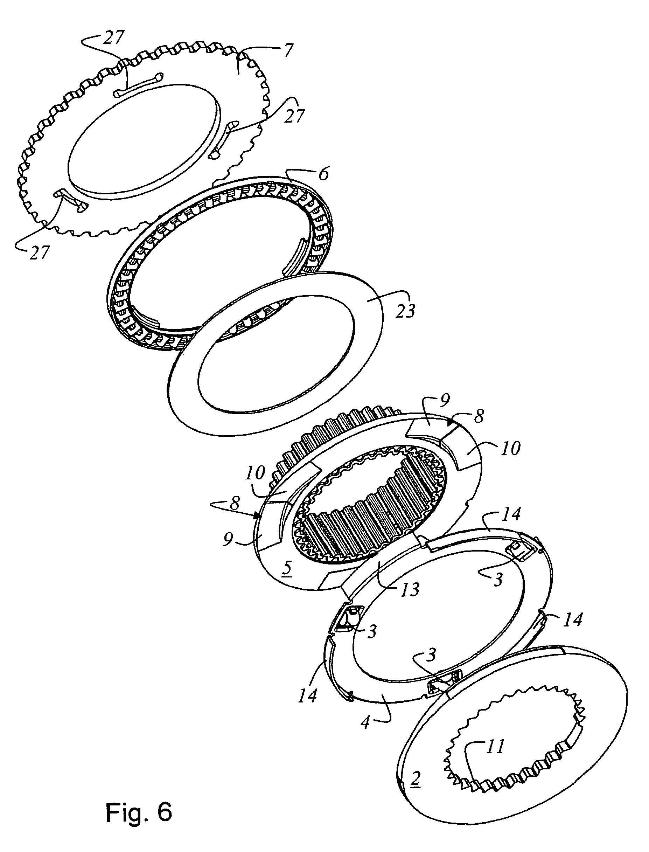

Figur 6 zeigt eine perspektivische Explosionsdarstellung des erfindungsgemäßen Vorspanneinheitmoduls 1, wobei hier auf die Unterseite 2b der ersten Rampenscheibe 2 geblickt wird. Wie bereits bei der ersten Rampenscheibe 2 erwähnt, besitzt auch die zweite Rampenscheibe 5 mehrere Rampenkonturen 8, die aus einer ersten Rampe 9 und einer zweiten Rampe 10 gebildet werden. Die Rampenkonturen sind dabei auf der Unterseite 5b der Rampenscheibe 5 ausgebildet. Die Anlaufscheibe 7 weist auf seiner Unterseite 7b Führungsnoppen 27 auf, die wie bereits in Figur 5 beschrieben ist, durch die Ausformungen 26 auf der Oberseite 7a der Anlaufscheibe gebildet worden sind. Die Anlaufscheibe 7 wird auf die Muffe 19 aufgeschoben und auf das Axiallager 6 so aufgesetzt, dass die Anlaufscheibe 7 über die Führungsnoppen 27 an dem Innenumfang 28 des Axiallagers 6 radial zur Rotationsachse 50 zentriert ist. Alternativ sind die Führungsnoppen 27 Elemente, die das Axiallager 6 mit der Anlaufscheibe 7 formschlüssig verbinden.

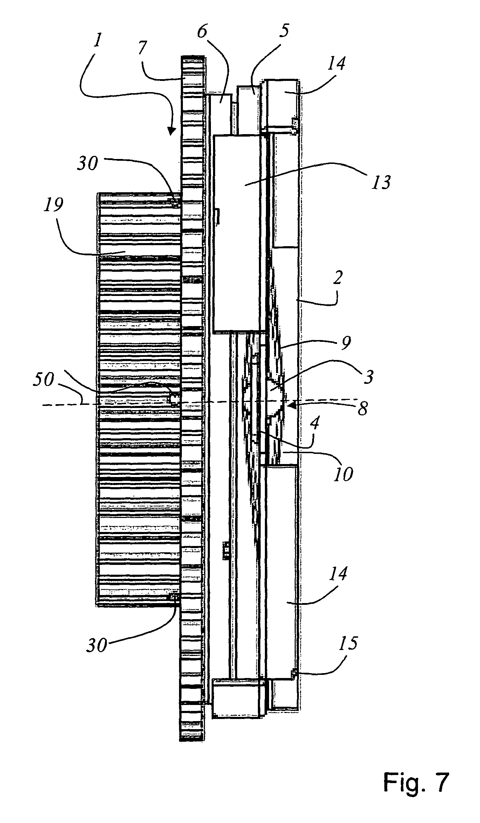

Figur 7 zeigt eine Seitenansicht der Vorspanneinheit 1. Die erste Rampenscheibe 2 und die zweite Rampenscheibe 5 befinden sich dabei in einer derartigen Stellung zueinander, dass sich die Rolle 3 an dem jeweils tiefsten Punkt der Rampenkontur 8 befindet. Bei dieser Stellung tritt zwischen der ersten Rampenscheibe 2 und der zweiten Rampenscheibe 5 kein Axialhub 74 ein. Durch die Einprägung der Rampenkontur 8 in die erste Rampenscheibe 2 ist eine minimale Wandstärke 71 an der tiefsten Stelle der Rampenkontur 8 in der ersten Rampenscheibe 2 gegeben. Ebenfalls ist durch die Einprägung der Rampenkontur 8 in der zweiten Rampenscheibe 5 eine minimale Wandstärke 72 gegeben. In der in Figur 7 gezeigten Ausführungsform der Vorspanneinheit 1 ist die Anlaufscheibe 7 durch mehrere radiale Vorsprünge 30 axial an der Muffe 19 zumindest nach maximalem Axialhub 74 gesichert. Die Vorsprünge 30 sind durch plastisches Verdrängen von Material aus der Muffe 19 hergestellt.

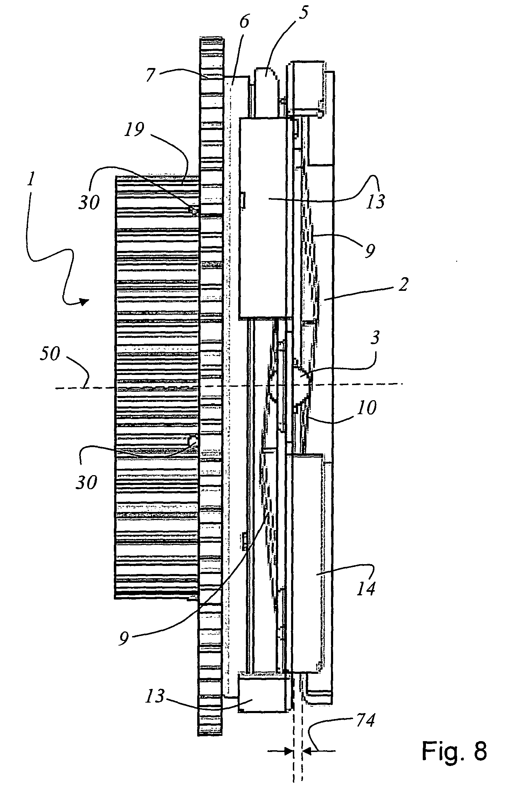

Figur 8 zeigt die Situation, bei der die erste Rampenscheibe 2 relativ zu der zweiten Rampenscheibe 5 gegeneinander verdreht ist. Dadurch bewegt sich die Rolle auf der Rampenkontur 8 von dem tiefsten Punkt zu einem anderen Punkt auf der Rampenkontur 8. In der hier gezeigten Darstellung liegt somit die Rolle an der zweiten Rampe 10 der beiden Rampenscheiben 2 und 5 an. Durch das Verdrehen zumindest einer der Rampenscheiben 2 und 5 relativ zueinander, stellt sich somit ein Axialhub 74 ein. Wie bereits in der Beschreibung zu Figur 7 erwähnt, sind die Rollen in der Neutralstellung in der tiefsten Stelle zwischen der ersten Rampe 9 und der zweiten Rampe 10 jeder der beiden Rampenscheiben 2 und 5. Bei relativer Verdrehung des Käfigs 4 und/oder der ersten Rampenscheibe 2 bzw. der zweiten Rampenscheibe 5 zwischen der ersten Rampe 9 oder der zweiten Rampe 10 an einer der Rampen 9 oder 10 bis zum Ende dieser, tritt ein Maximalhub auf. Die zweite Rampenscheibe 5 hebt sich somit axial (in Richtung der Achse 50) und entfernt sich bis zu einem maximalen Hub von der ersten Rampenscheibe 2.

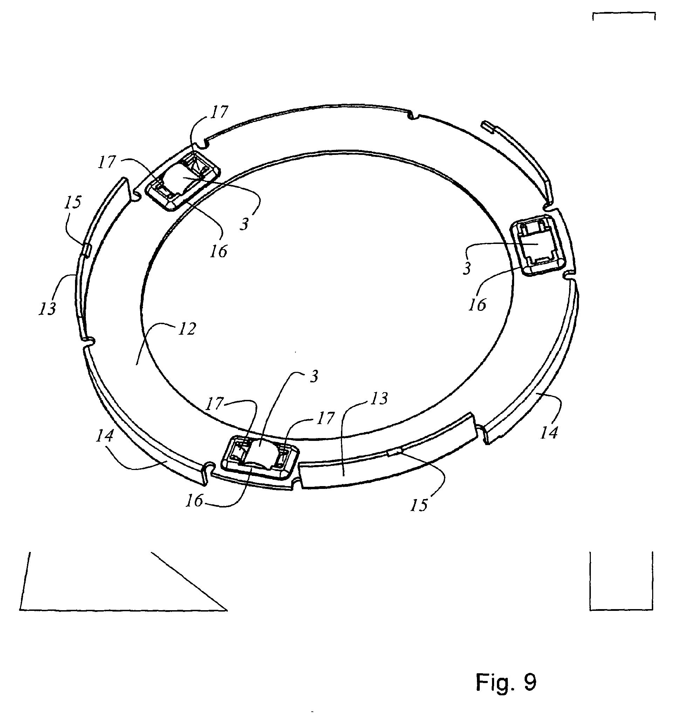

Figur 9 zeigt eine Draufsicht auf den Käfig 4. In der hier dargestellten Ausführungsform sind in der Radialscheibe 12 des Käfigs 4 drei Taschen 16 ausgebildet, in denen jeweils einer oder drei Rollen, bzw. Wälzkörper 3 gehaltert sind. Senkrecht, bzw. axial in beide Richtungen stehen von der Radialscheibe 12 erste Haltelappen 13, bzw. zweite Haltelappen 14 ab. An den Haltelappen 13 und 14 sind jeweils Haltenasen 15 ausgebildet. Der Käfig 4 selbst ist vorzugsweise ein Blechbiegeteil oder ein Zieh-, bzw. Stanzbiegebauteil aus Blech. Die Taschen 16 in der Radialscheibe 12 werden mit einem Tiefziehverfahren gebildet. In den Taschen 16 sind elastische Halterungen 17 ausgebildet, zwischen denen die Vorspannrollen eingeschnappt sind.

Bei der hier dargestellten Ausführungsform des Vorspanneinheitmoduls 1 werden, wie in den Figuren dargestellt, drei Rollen verwendet. So sind diese Rollen jeweils um 120 ° versetzt in der Radialscheibe 12 des Käfigs 4 eingesetzt. Falls mehr als drei Rollen verwendet werden, ist die Verteilung dieser Rollen auf der Radialscheibe 12 des Käfigs 4 derart ausgestaltet, dass zwischen jeder der Rollen der gleiche Winkelabstand vorliegt.

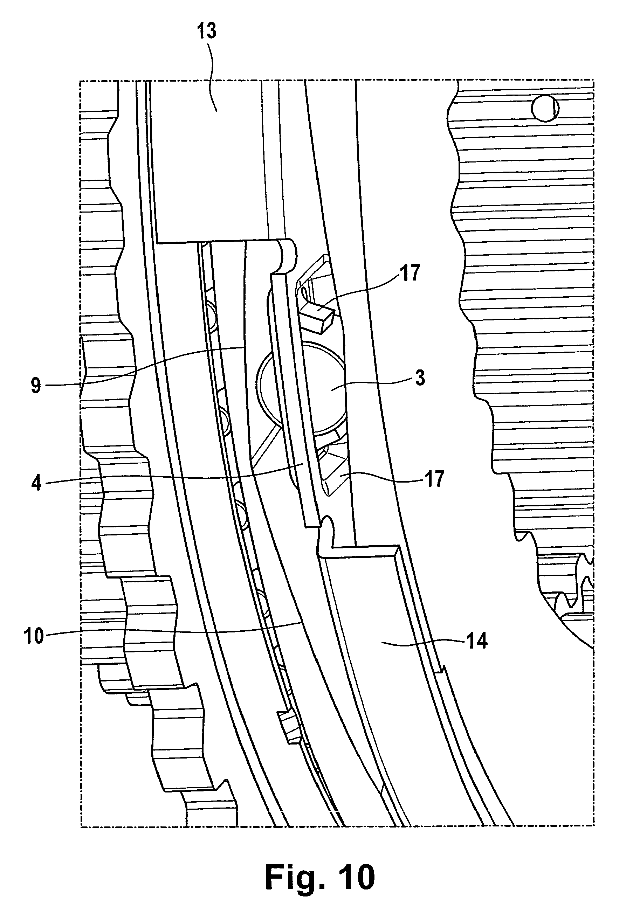

Figur 10 zeigt eine Detailansicht des Vorspanneinheitmoduls 1, bei der das Zusammenwirken der im Käfig 4 gehalterten Rolle mit der zugeordneten Rampenkontur 8 der ersten und der zweiten Rampenscheibe 2 und 5 ersichtlich ist. Die am Käfig 4 ausgebildeten ersten bzw. zweiten Haltelappen 13 und 14 dienen zur Montage von zumindest der ersten Rampenscheibe 2, der zweiten Rampenscheibe 5 und des Käfigs 4 mit den Wälzkörpern 3 zu einer Einheit.

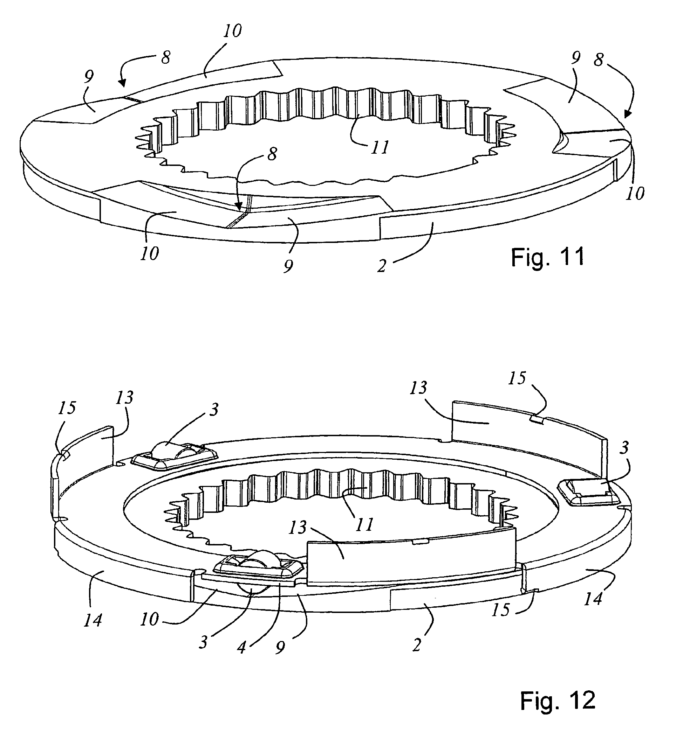

Die Figuren 11 bis 15 verdeutlichen, wie die einzelnen Bauteile des Vorspanneinheitmoduls 1 zu einer Einheit zusammengefügt werden. In Figur 11 ist die erste Rampenscheibe 2 alleine dargestellt. Bei dem nächsten Montageschritt, wie aus Figur 12 ersichtlich, wird der Käfig 4 derart auf die erste Rampenscheibe 2 aufgesetzt, dass die Wälzkörper 3 an der tiefsten Stelle der Rampenkontur 8 der ersten Rampenscheibe 2 zu liegen kommen. Der Käfig 4, an dem die ersten bzw. zweiten Haltelappen 13 und 14 ausgebildet sind, dient im Wesentlichen dazu, die erste Rampenscheibe 2 und die zweite Rampenscheibe 5 zu haltern. Dazu wird in diesem Montageschritt der Käfig 4 derart auf die erste Rampenscheibe 2 so aufgesetzt, dass die zweiten Haltelappen 14 die erste Rampenscheibe 2 radial umgreifen und die Haltenasen 15 der zweiten Haltelappen 14 die erste Rampenscheibe 2 axial hintergreifen. Dabei ist die Rampenkontur 8 der ersten Rampenscheibe 2 in Berührung mit den im Käfig 4 vorgesehenen Wälzkörpern 3.

Im nächsten Montageschritt (siehe Figur 3) wird die zweite Rampenscheibe 5 so auf den Käfig 4 aufgesetzt, dass die Rampenkontur 8 der zweiten Rampenscheibe 5 auf die Wälzkörper 3 zu liegen kommt. Die ersten Haltelappen 13 umgreifen die zweite Rampenscheibe 2 außen radial. Die an den ersten Haltelappen 13 ausgebildeten Haltenasen 15 hintergreifen die zweite Rampenscheibe 5 axial mit einem Abstand. Somit sind zumindest die erste Rampenscheibe 2, der Käfig 4 und die zweite Rampenscheibe 5 zu einer vormontierten Einheit miteinander verbunden.

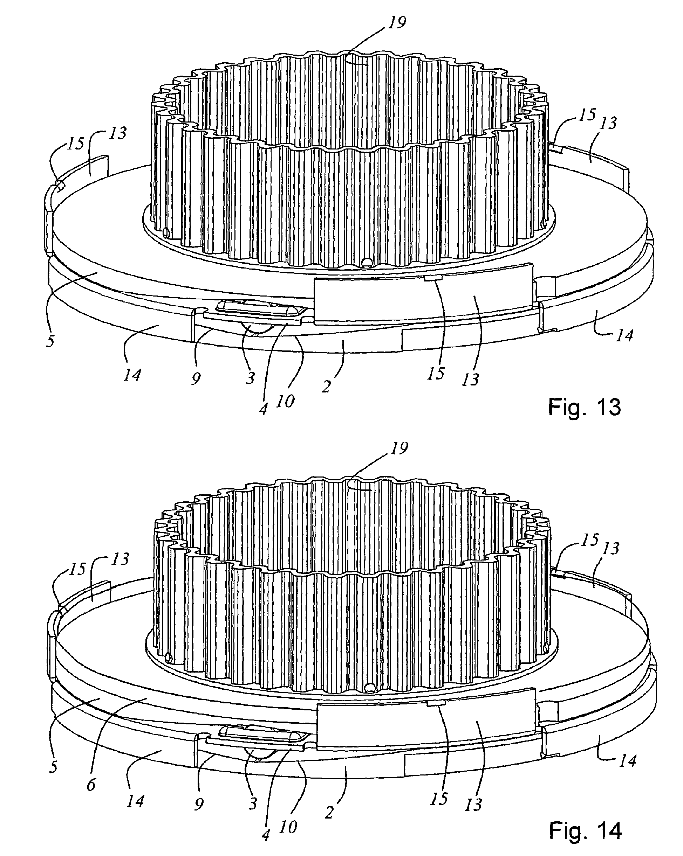

Bei dem in Figur 14 dargestellten Montageschritt wird das Axiallager 6 dem Vorspanneinheitmodul 1 hinzugefügt. Die ersten Haltelappen 13 sind axial so lang, dass die ersten Haltelappen 13 auch noch das Axiallager 6 radial um-und die Haltenasen 15 dieses axial hintergreifen. Somit wird in diesem Montageschritt dann dementsprechend das Axiallager 6 durch Einschnappen durch die ersten Haltelappen 13 montiert.

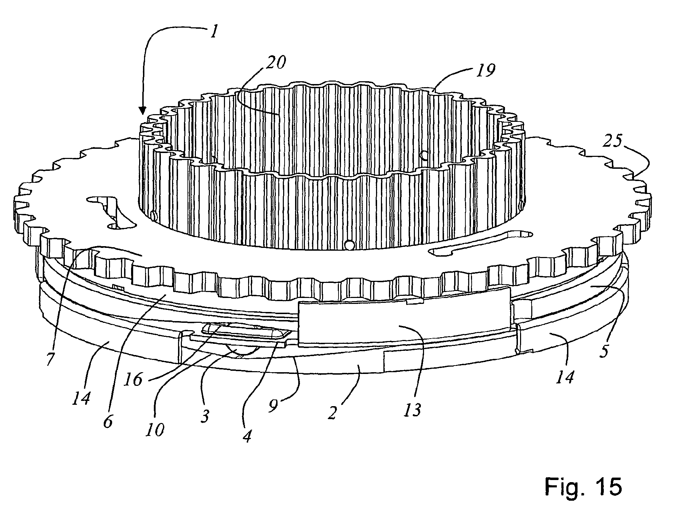

In der Darstellung der Figur 15 wird die Anlaufscheibe 7 auf die Muffe 19 des Vorspanneinheitmoduls 1 aufgeschoben und auf das Axiallager 6 so aufgesetzt, dass die Anlaufscheibe 7 über die Führungsnoppen 27 an dem Innenumfang 28 des Axiallagers 6 radial zur Rotationsachse 50 zentriert ist. Das so montierte Vorspanneinheitmodul 1 stellt dann eine vormontierte Einheit dar, die dann bei der Montage eines Getriebes mit wenigen Handgriffen eingebaut werden kann.

Die Rampenscheiben 2 und 5 zusammen mit dem Käfig 4 und den Rollen, sowie das Axiallager 6 und die Anlaufscheibe 7 mit Außenverzahnung sind als Baueinheit zusammengebaut und werden zum Schluss in der Einheit durch partielle radiale Verstemmung 30 (siehe Figur 8) verliersicher aneinander gehalten. Dadurch kann die komplette Vorspanneinheit 1 ohne zusätzliche Vorrichtungen transportiert bzw. beim Kunden als eine Einheit montiert werden.

Die Erfindung wurde unter Bezugnahme auf eine bevorzugte Ausführungsform beschrieben. Es ist für einen Fachmann selbstverständlich, dass Änderungen und Abweichungen der Erfindung gemacht werden können, ohne dabei den Schutzbereich der nachstehenden Ansprüche zu verlassen.

## Patentansprüche

1. Vorspanneinheitmodul (1) mit einer ersten Rampenscheibe (2) einer zweiten Rampenscheibe und mit einen mehrere Wälzkörper (3) tragender Käfig (4) zur Halterung der Wälzkörper (3) zwischen der ersten und der zweiten Rampenscheibe (5), **dadurch gekennzeichnet, dass** zumindest eine der Rampenscheiben (2, 5) und der Käfig (4) formschlüssig zu einer selbst haltenden Ein*heit* axial aneinander gehalten sind, wobei der Käfig (4) gegenüber der zumindest einen Rampenscheibe (2, 5) verdreh-schwenkbar ist.

2. Vorspanneinheitmodul (1) nach Anspruch 1, **dadurch gekennzeichnet, dass** das Vorspanneinheitmodul (1) eine erste Rampenscheibe (2), den Käfig (4) zur Halterung der Wälzkörper (3), eine zweite Rampenscheibe (5), ein Lager (6) und eine Anlaufscheibe (7) umfasst, wobei der Käfig (4) die erste Rampenscheibe (2), die Wälzkörper (3) im Käfig (4), die zweite Rampenscheibe (5) und das Lager (6) zu einer selbst haltenden Einheit sichert.

3. Vorspanneinheitmodul (1) nach Anspruch 2, **dadurch gekennzeichnet, dass** die Anlaufscheibe (7) am Lager (6) formschlüssig gehaltert ist, so dass alle Bauteile die selbst halternde Einheit bilden.

4. Vorspanneinheitmodul (1) nach einem der Ansprüche 1 bis 3, **dadurch gekennzeichnet, dass** der Käfig (4) aus einer Radialscheibe (12) gebildet ist, an der erste und zweite Haltelappen (13, 14) ausgeformt sind, wobei die ersten und zweiten Haltelappen (13, 14) im Wesentlichen senkrecht von der Radialscheibe (12) abstehen und die ersten Haltelappen (13) in eine axialen Richtung weisen, die der axialen Richtung der zweiten Haltelappen (14) entgegengesetzt ist.

5. Vorspanneinheitmodul (1) nach Anspruch 4, **dadurch gekennzeichnet, dass** an den ersten und zweiten Haltelappen (13, 14) jeweils Haltenasen (15) ausgebildet sind, die zumindest mit der ersten Rampenscheibe (2) und der zweiten Rampenscheibe (5) zur formschlüssigen Halterung zusammenwirken.

6. Vorspanneinheitmodul (1) nach Anspruch 4, **dadurch gekennzeichnet, dass** der Käfig (4) vorzugsweise ein Blechbiegeteil oder ein Zieh- bzw. Stanz-Biegebauteil aus Blech ist.

7. Vorspanneinheitmodul (1) nach einem der Ansprüche 4 bis 6, **dadurch gekennzeichnet, dass** in der Radialscheibe (12) des Käfigs (4) mehrere Taschen (16) zum Führen und Halten der Wälzkörper (3) ausgebildet sind.

8. Vorspanneinheitmodul (1) nach Anspruch 7, **dadurch gekennzeichnet, dass** die Taschen (16) elastische Halterungen (17) ausgebildet haben, in die die Wälzkörper (3) einschnappen.

9. Vorspanneinheitmodul (1) nach einem der Ansprüche 1 bis 8, **dadurch gekennzeichnet, dass** die Wälzkörper (3) Kugeln sind.

10. Vorspanneinheitmodul (1) nach einem der Ansprüche 1 bis 8, **dadurch gekennzeichnet, dass** die Wälzkörper (3) Rollen sind.

11. Vorspanneinheitmodul (1) nach Anspruch 10, **dadurch gekennzeichnet, dass** mindestens drei und höchstens fünf Rollen zwischen den beiden Rampenscheiben (2, 5) gleich verteilt am Käfig (4) angeordnet sind.

12. Vorspanneinheitmodul (1) nach Anspruch 11, **dadurch gekennzeichnet, dass** drei Rollen zwischen den beiden Rampenscheiben (2, 5) gleich verteilt angeordnet sind, wobei jede der beiden Rampenscheiben (2, 5) drei Rampenkonturen (8) ausgebildet hat.

## Claims

1. Preload unit module (1) having a first ramp disc (2), a second ramp disc and a cage (4) carrying a plurality of rolling bodies (3) for holding the rolling bodies (3) between the first and the second ramp disc (5), **characterized in that** at least one of the ramp discs (2, 5) and the cage (4) are held axially against each other in a positively locking manner to form a self-contained unit, the cage (4) being rotationally pivotable with respect to the at least one ramp disc (2, 5).

2. Preload unit module (1) according to Claim 1, **characterized in that** the preload unit module (1) comprises a first ramp disc (2), the cage (4) for holding the rolling bodies (3), a second ramp disc (5), a bearing (6) and a thrust disc (7), the cage (4) securing the first ramp disc (2), the rolling bodies (3) in the cage (4), the second ramp disc (5) and the bearing (6) to form a self-contained unit.

3. Preload unit module (1) according to Claim 2, **characterized in that** the thrust disc (7) is held on the bearing (6) in a positively locking manner, so that all the components form the self-contained unit.

4. Preload unit module (1) according to one of Claims 1 to 3, **characterized in that** the cage (4) is formed from a radial disc (12), on which first and second retaining tabs (13, 14) are moulded, the first and second retaining tabs (13, 14) protruding substantially perpendicularly from the radial disc (12), and the first retaining tabs (13) pointing in an axial direction which is opposite to the axial direction of the second retaining tabs (14).

5. Preload unit module (1) according to Claim 4, **characterized in that** formed on the first and second retaining tabs (13, 14) in each case are retaining lugs (15), which interact at least with the first ramp disc (2) and the second ramp disc (5) in order to hold them in a positively locking manner.

6. Preload unit module (1) according to Claim 4, **characterized in that** the cage (4) is preferably a bent sheet metal part or a drawn or punched bent component made of sheet metal.

7. Preload unit module (1) according to one of Claims 4 to 6, **characterized in that** formed in the radial disc (12) of the cage (4) are a plurality of pockets (16) in order to guide and hold the rolling bodies (3).

8. Preload unit module (1) according to Claim 7, **characterized in that** the pockets (16) have resilient mountings (17) formed, into which the rolling bodies (3) snap.

9. Preload unit module (1) according to one of Claims 1 to 8, **characterized in that** the rolling bodies (3) are balls.

10. Preload unit module (1) according to one of Claims 1 to 8, **characterized in that** the rolling bodies (3) are rollers.

11. Preload unit module (1) according to Claim 10, **characterized in that** at least three and at most five rollers are arranged between the two ramp discs (2, 5), distributed equally on the cage (4).

12. Preload unit module (1) according to Claim 11, **characterized in that** three rollers are arranged distributed equally between the two ramp discs (2, 5), each of the two ramp discs (2, 5) having three ramp contours (8) formed.

## Revendications

1. Module à unité de précontrainte (1) comprenant un premier disque de rampe (2), un deuxième disque de rampe et une cage (4) portant plusieurs corps de roulement (3) pour retenir les corps de roulement (3) entre le premier et le deuxième disque de rampe (5), **caractérisé en ce qu'**au moins l'un des disques de rampe (2, 5) et la cage (4) sont maintenus axialement l'un contre l'autre par engagement positif pour former une unité autoportante, la cage (4) pouvant pivoter par rotation par rapport à l'au moins un disque de rampe (2, 5).

2. Module à unité de précontrainte (1) selon la revendication 1, **caractérisé en ce que** le module à unité de précontrainte (1) comprend un premier disque de rampe (2), la cage (4) pour retenir les corps de roulement (3), un deuxième disque de rampe (5), un palier (6) et un disque de butée (7), la cage (4) fixant le premier disque de rampe (2), les corps de roulement (3) dans la cage (4), le deuxième disque de rampe (5) et le palier (6) pour former une unité autoportante.

3. Module à unité de précontrainte (1) selon la revendication 2, **caractérisé en ce que** le disque de butée (7) est fixé par engagement positif sur le palier (6), de sorte que tous les composants forment l'unité autoportante.

4. Module à unité de précontrainte (1) selon l'une quelconque des revendications 1 à 3, **caractérisé en ce que** la cage (4) est formée par un disque radial (12) sur lequel sont formés des premiers et deuxièmes volets de retenue (13, 14), les premiers et deuxièmes volets de retenue (13, 14) faisant saillie sensiblement perpendiculairement depuis le disque radial (12) et les premiers volets de retenue (13) étant tournés dans une direction qui est opposée à la direction axiale des deuxièmes volets de retenue (14).

5. Module à unité de précontrainte (1) selon la revendication 4, **caractérisé en ce que** des nez de retenue (15) sont réalisés sur les premiers et deuxièmes volets de retenue (13, 14), lesquels nez de retenue coopèrent au moins avec le premier disque de rampe (2) et le deuxième disque de rampe (5) pour réaliser une fixation par engagement positif.

6. Module à unité de précontrainte (1) selon la revendication 4, **caractérisé en ce que** la cage (4) est de préférence une pièce en tôle cintrée ou un composant cintré embouti ou estampé en tôle.

7. Module à unité de précontrainte (1) selon l'une quelconque des revendications 4 à 6, **caractérisé en ce que** dans le disque radial (12) de la cage (4) sont réalisées plusieurs poches (16) pour le guidage et le maintien des corps de roulement (3).

8. Module à unité de précontrainte (1) selon la revendication 7, **caractérisé en ce que** les poches (16) présentent des fixations élastiques (17) dans lesquelles s'encliquètent les corps de roulement (3).

9. Module à unité de précontrainte (1) selon l'une quelconque des revendications 1 à 8, **caractérisé en ce que** les corps de roulement (3) sont des billes.

10. Module à unité de précontrainte (1) selon l'une quelconque des revendications 1 à 8, **caractérisé en ce que** les corps de roulement (3) sont des rouleaux.

11. Module à unité de précontrainte (1) selon la revendication 10, **caractérisé en ce qu'**au moins trois et au plus cinq rouleaux sont disposés entre les deux disques de rampe (2, 5) de manière répartie uniformément sur la cage (4).

12. Module à unité de précontrainte (1) selon la revendication 11, **caractérisé en ce que** trois rouleaux sont disposés de manière répartie uniformément entre les deux disques de rampe (2, 5), chacun des deux disques de rampe (2, 5) présentant trois contours de rampe (8).

**Fig. 1**
Stand der Technik

Stand der Technik

Fig. 2

$F_T$

$F_{N1}$

$\alpha$

$F_{R1} \sim 0$

$F_T$

$\alpha$

$F_{R2} = \mu \cdot F_{N2}$

$F_{N2} = c_{DC} \cdot h$

Fig. 3

Fig. 4

Fig. 5

Fig. 6

Fig. 7

Fig. 8

Fig. 9

**Fig. 10**

Fig. 11

Fig. 12

Fig. 13

Fig. 14

Fig. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005053555 B3
- US 5485904 A
- US 5620072 A
- DE 102004015271 B4